# EUROPEAN PATENT APPLICATION

(11) **EP 1 803 747 A1**
(43) Date of publication of application: **04.07.2007**
(21) Application number: 05028759.8
(22) Date of filing: 30.12.2005
(51) Int. Cl.: C08F 10/00, C08F 2/00

(54) **Surface-modified polymerization catalysts for the preparation of low-gel polyolefin films**

(71) Applicant: Borealis Technology Oy, 06101 Porvoo (FI)
(72) Inventor: Kokko, Esa, 01520 Vantaa (FI); Maaranen, Janne, 04260 Kerava (FI); Severn, John, 00810 Helsinki (FI); Lommi, Marjaana, 06400 Porvoo (FI)
(74) Representative: Bublak, Wolfgang

(57) **Abstract**

Use of a catalyst composition treated with a surface modifier in the polymerization of olefins for lowering the gel content in the resulting polyolefin, wherein the surface modifier has a polar residue capable of interacting with the surface of the catalyst composition and a lipophilic residue and is selected from carboxylate metal salts, nitrogen containing catalyst surface modifiers, phosphorus containing catalyst surface modifiers, oxygen containing catalyst surface modifiers, sulfur containing catalyst surface modifiers, fluoro containing polymeric catalyst surface modifiers or mixtures thereof and wherein the gel content is determined by using pressed plate gel analysis method.

## Description

The present invention relates to the use of surface-modified polymerization catalysts for the preparation of low-gel polyolefin and films prepared thereof..

Films prepared from polyolefin resins have widespread utility as packaging materials. However, for many high-end applications common polyolefin films do not readily fulfil the high physical and optical requirements of the packaging industry. One cause for insufficient quality is the formation of gel spots in the polyolefin during polymerization which become visible when polyolefin pellets are processed to films. These gel spots not only deteriorate the optical quality but also negatively affect the physical properties and processing properties of the resulting film. It is therefore highly desirable to obtain polyolefin films having a low gel content.

It has now surprisingly been found that gel formation in polyolefins can be effectively reduced by the use of surface-modified polymerization catalysts, i.e. catalysts which have been treated by at least one catalyst surface modifier.

### Polyolefin films

The present invention relates to a film comprising a polyolefin composition of one or more suitable polyolefins.

Suitable polyolefins comprise polyethylene and polypropylene homopolymers and also polyethylene, polypropylene and polypropylene/ethylene copolymers comprising from 0 to 10 wt % C₃ to C₃₀-alpha-olefin or C₄ to C₃₀-diene-derived units, and more particularly a copolymer of ethylene and/or propylene with 0 to 10 wt % alkenes, for example 1-propene, 1-butene, 1-pentene, 4-methyl-pent-1-ene, 1-hexene, cyclohexene, 1-octene and norbomene, or dienes, for example butadiene, hexadiene or octadiene. In a preferred embodiment polyethylene compositions for films contain as comonomers 0 to 10 wt % C₃ to C₃₀-alpha-olefins, preferably C₃ to C₁₀-alpha-olefins, more preferably C₃ to C₆-alpha-olefins, and most preferably butene or hexene, or mixtures thereof.

The polyolefin composition further shows monomodal, bimodal or multimodal molecular weight distribution. Bimodal or multimodal polyolefins can be produced in dual or multistage and -reactor processes which are known in the art and for example are described by F. P. Alt et al. in 163 MACROMOL. SYMP. 135-143 (2001) and 2 METALLOCENE-BASED POLYOLEFINS 366-378 (2000); and U.S. Pat. No. 6,407,185, U.S. Pat. No. 4,975,485, U.S. Pat. No. 4,511,704 or in single reactors with the use of a plurality of catalysts.

As used herein, the term "film" or "films" includes skins, sheets, or membranes of a thickness of from 2000 µm to 10 µm, more preferably from 1000 µm to 20 µm, and even more preferably from 500 µm to 30 µm, and most preferably from 200 µm to 50 µm, (e.g. cast films can have a thickness below 50 µm, even about 40 µm) and includes films fabricated by any process known in the art such as by casting or blowing techniques - oriented or not - from an extruded or calendered, preferably extruded, polyolefin. The use of the polyolefin films can include any number of functions such as wrapping, protecting, packaging, bagging, coating, coextrusion with other materials; and further, may have any commercially desirable dimensions of width, length, etc. The films of the present invention are not limited to transparent films, and may be opaque or translucent or transparent, preferably transparent, and have other properties as defined herein. The films of the present invention may further be co-extruded with or otherwise secured or laminated to other films/sheets/structures and thus can form structures of thickness greater than 2000 µm.

Furthermore, the polyolefin films of the present invention have improved optical, physical and processing properties.

In a preferred embodiment polyethylene compositions prepared by the use of surface modified catalysts is characterized by a combination of features, like molecular weight (Mw), melt flow rate (MFR), density and low gel content.

Such features of polyethylene compositions for films are described in the following. The molecular structure of polyethylene film can be of uni-, bi-, or multimodal with respect to molar mass or comonomer content. The final Mw or (in case of bi- or multimodal polymers) the Mw of a component may vary from about 50000 to about 380000, more preferably from about 60000 to about 350000, g/mol, the final Mn or (in case of bi- or multimodal polymers) the Mn of a component from about 10000 to about 150000 g/mol, the final MFR2 (2.16kg/190°C) or (in case of bi- or multimodal polymers) the MFR2 of a component from about 0.1 to 200 g/10 min, more preferably from about 0.5 to 50 g/10 min, and the final density or (in case of bi- or multimodal polymers) the density of a component from about 910 to 960 kg/m³. Small amounts of polymer in the polyethylene composition outside the above defined ranges for Mw, Mn, MFR2 and density are allowable. To obtain excellent optical properties, gel content should be minimal, preferably less than 100 gels/10 g, preferably less than 60 gels/10 g, more preferably less than 40 gels/10 g, even more preferably less than 25 gels/10 g, and most preferably less than 10 gels/10 g, as determined with the pressed plate method described in the experimental section. Other parameters are also contemplated.

### Surface modified catalyst composition

The surface modified catalyst composition comprises at least one catalyst, preferably a supported catalyst, more preferably a supported single site catalyst, and at least one catalyst surface modifier. The catalyst composition may further contain an activator and/or a cocatalyst.

### Catalysts and co-catalysts of the invention

All polymerization catalysts including conventional-type transition metal catalysts are suitable for use in the polymerizing process of the invention. However, single site catalysts are particularly preferred. The following is a non-limiting discussion of the various polymerization catalysts useful in the invention.

### Conventional-Type Transition Metal Catalysts

Conventional-type transition metal catalysts are those traditional Ziegler-Natta catalysts well known in the art. Examples of conventional-type transition metal catalysts are discussed in U.S. Patent Nos. 4,115,639, 4,077,904 4,482,687, 4,564,605, 4,721,763, 4,879,359 and 4,960,741 all of which are herein fully incorporated by reference. The conventional-type transition metal catalysts that may be used in the present invention include transition metal compounds from Groups III to VIII, preferably IVB to VIB of the Periodic Table of Elements.

These conventional-type transition metal catalysts may be represented by the formula: MRₓ, where M is a metal from Groups IIIB to VIII, preferably Group IVB, more preferably titanium; R is a halogen or a hydrocarbyloxy group; and x is the valence of the metal M. Non-limiting examples of R include alkoxy, phenoxy, bromide, chloride and fluoride. Non-limiting examples of conventional-type transition metal catalysts where M is titanium include TiCl₄, TiBr₄, Ti(OC₂H₅)₃Cl, Ti(OC₂H₅)Cl₃, Ti(OC₄H₉)₃Cl, Ti(OC₃H₇)₂Cl₂, Ti(OC₂H₅)₂Br₂, TiCl₃.1/3AlCl₃ and Ti(OC₁₂H₂₅)Cl₃.

Conventional-type transition metal catalysts based on magnesium/titanium electron-donor complexes that are useful in the invention are described in, for example, U.S. Patent Nos. 4,302,565 and 4,302,566, which are herein fully incorporate by reference. The MgTiCl₆ (ethyl acetate)₄ derivative is particularly preferred. British Patent Application 2,105,355, herein incorporated by reference, describes various conventional-type vanadium catalysts. Non-limiting examples of conventional-type vanadium catalysts include vanadyl trihalide, alkoxy halides and alkoxides such as VOCl₃, VOCl₂(OBu) where Bu is butyl and VO(OC₂H₅)₃; vanadium tetra-halide and vanadium alkoxy halides such as VCl₄ and VCl₃(OBu); vanadium and vanadyl acetyl acetonates and chloroacetyl acetonates such as V(AcAc)₃ and VOCl₂(AcAc) where (AcAc) is an acetyl acetonate. The preferred conventional-type vanadium catalysts are VOCl₃, VCl₄ and VOCl₂-OR where R is a hydrocarbon radical, preferably a C₁ to C₁₀ aliphatic or aromatic hydrocarbon radical such as ethyl, phenyl, isopropyl, butyl, propyl, n-butyl, iso-butyl, tertiary-butyl, hexyl, cyclohexyl, naphthyl, etc., and vanadium acetyl acetonates.

Still other conventional-type transition metal catalysts and catalyst systems suitable for use in the present invention are disclosed in U.S. Patent Nos. 4,124,532, 4,302,565, 4,302,566 and 5,763,723 and published EP-A2 0 416 815 A2 and EP-A1 0 420 436, which are all herein incorporated by reference. The conventional-type transition metal catalysts of the invention may also have the general formula M'ₜM"X₂ₜYᵤE, where M' is Mg, Mn and/or Ca; t is a number from 0.5 to 2; M" is a transition metal Ti, V and/or Zr; X is a halogen, preferably Cl, Br or I; Y may be the same or different and is halogen, alone or in combination with oxygen, -NR₂, -OR, -SR, -COOR, or -OSOOR, where R is a hydrocarbyl radical, in particular an alkyl, aryl, cycloalkyl or arylalkyl radical, acetylacetonate anion in an amount that satisfies the valence state of M'; u is a number from 0.5 to 20; E is an electron donor compound selected from the following classes of compounds: (a) esters of organic carboxylic acids; (b) alcohols; (c) ethers; (d) amines; (e) esters of carbonic acid; (f) nitriles; (g) phosphoramides, (h) esters of phosphoric and phosphorus acid, and (j) phosphorus oxy-chloride. Non-limiting examples of complexes satisfying the above formula include: MgTiCl₅·2CH₃COOC₂H₅, Mg₃Ti₂Cl₁₂·7CH₃COOC₂H₅, MgTiCl₅·6C₂H₅OH, MgTiCl₅·100CH₃OH, MgTiCl₅·tetrahydrofuran, MgTi₂ Cl₁₂·7C₆H₅CN, Mg₃Ti₂Cl₁₂·6C₆H₅COOC₂H₅, MgTiCl₆·2CH₃COOC₂H₅, MgTiCl₆·6C₅H₅N, MgTiCl₅(OCH₃)·2CH₃COOC₂H₅, MgTiCl₅N(C₆H₅)₂·3CH₃ COOC₂H₅, MgTiBr₂Cl₄·2(C₂H₅)₂O, MnTiCl₅·4C₂H₅OH, Mg₃V₂Cl₁₂·7CH₃ COOC₂H₅, MgZrCl₆·4 tetrahydrofuran. Other catalysts may include cationic catalysts such as AlCl₃, and other cobalt and iron catalysts well known in the art.

Typically, these conventional-type transition metal catalysts are activated with one or more of the conventional-type cocatalysts described below.

### Conventional-Type Cocatalysts

Conventional-type cocatalysts for the above conventional-type transition metal catalysts may be represented by the formula M³M⁴ᵥX²_{c}R³_{b-c}, wherein M³ is a metal from Group IA, IIA, IIB and IIIA of the Periodic Table of Elements; M⁴ is a metal of Group IA of the Periodic Table of Elements; v is a number from 0 to 1; each X² is any halogen; c is a number from 0 to 3; each R³ is a monovalent hydrocarbon radical or hydrogen; b is a number from 1 to 4; and wherein b minus c is at least 1. Other conventional-type organometallic cocatalysts for the above conventional-type transition metal catalysts have the formula M³R³_{k,} where M³ is a Group IA, IIA, IIB or IIIA metal, such as lithium, sodium, beryllium, barium, boron, aluminum, zinc, cadmium, and gallium; k equals 1, 2 or 3 depending upon the valency of M³ which valency in turn normally depends upon the particular Group to which M³ belongs; and each R³ may be any monovalent hydrocarbon radical.

Non-limiting examples of conventional-type organometallic cocatalysts of Group IA, IIA and IIIA useful with the conventional-type catalysts described above include methyllithium, butyllithium, dihexylmercury, butylmagnesium, diethylcadmium, benzylpotassium, diethylzinc, tri-n-butylaluminum, diisobutyl ethylboron, diethylcadmium, di-n-butylzinc and tri-n-amylboron, and, in particular, the aluminum alkyls, such as tri-hexyl-aluminum, triethylaluminum, trimethylaluminum, and tri-isobutylaluminum. Other conventional-type cocatalysts include mono-organohalides and hydrides of Group IIA metals, and mono- or di-organohalides and hydrides of Group IIIA metals. Non-limiting examples of such conventional-type cocatalysts include di-isobutylaluminum bromide, isobutylboron dichloride, methyl magnesium chloride, ethylberyllium chloride, ethylcalcium bromide, di-isobutylaluminum hydride, methylcadmium hydride, diethylboron hydride, hexylberyllium hydride, dipropylboron hydride, octylmagnesium hydride, butylzinc hydride, dichloroboron hydride, di-bromo-aluminum hydride and bromocadmium hydride. Conventional-type organometallic cocatalysts are known to those in the art and a more complete discussion of these compounds may be found in U.S. Patent Nos. 3,221,002 and 5,093,415, which are herein fully incorporated by reference.

For purposes of this patent specification and appended claims conventional-type transition metal catalysts exclude those single site catalysts discussed below. For purposes of this patent specification and the appended claims the term "cocatalyst" refers to conventional-type co-catalysts or conventional-type organometallic cocatalysts.

### Single Site Catalysts

Generally, single site catalysts include half and full sandwich compounds having one or more ligands including cyclopentadienyl-type structures or other similar functioning structure such as pentadiene, cyclooctatetraendiyl and imides. Typical single site compounds are generally described as containing one or more ligands capable of η-5 bonding to a transition metal atom, usually, cyclopentadienyl derived ligands or moieties, in combination with a transition metal selected from Group 3 to 8, preferably 4, 5 or 6 or from the lanthanide and actinide series of the Periodic Table of Elements. Exemplary of these single site catalysts and catalyst systems are described in for example, U.S. Patent Nos. 4,530,914, 4,871,705, 4,937,299, 5,017,714, 5,055,438, 5,096, 867, 5,120,867, 5,124,418, 5,198,401, 5,210,352, 5,229,478, 5,264,405, 5,278,264, 5,278,119, 5,304,614, 5,324,800, 5,347,025, 5,350,723, 5,384,299, 5,391,790, 5,391,789, 5,399,636, 5,408,017, 5,491,207, 5,455,366, 5,534,473, 5,539,124, 5,554,775, 5,621,126, 5,684,098, 5,693,730, 5,698,634, 5,710,297, 5,712,354, 5,714,427, 5,714,555, 5,728,641, 5,728,839, 5,753,577, 5,767,209, 5,770,753 and 5,770,664 all of which are herein fully incorporated by reference. Also, the disclosures of European publications EP-A-0 591 756, EP-A-0 520 732, EP-A- 0 420 436, EP-B1 0 485 822, EP-B1 0 485 823, EP-A2-0 743 324 and EP-B1 0 518 092 and PCT publications WO 91/04257, WO 92/00333, WO 93/08221, WO 93/08199, WO 94/01471, WO 96/20233, WO 97/15582, WO 97/19959, WO 97/46567, WO 98/01455, WO 98/06759 and WO 98/011144 are all herein fully incorporated by reference for purposes of describing typical single site catalysts and catalyst systems.

In one embodiment, single site catalysts of the invention are represented by the formula:

L^{A}L^{B}MQ (I)

where M is a metal from the Periodic Table of the Elements and may be a Group 3 to 10 metal, preferably, a Group 4, 5 or 6 transition metal or a metal from the lanthanide or actinide series, more preferably M is a transition metal from Group 4, even more preferably zirconium, hafnium or titanium. L^{A} and L^{B} are ligands that include cyclopentadienyl derived ligands or substituted cyclopentadienyl derived ligands or heteroatom substituted or heteroatom containing cyclopentadienyl derived ligands, or hydrocarbyl substituted cyclopentadienyl derived ligands, or moieties such as indenyl ligands, benzindenyl ligands, fluorenyl ligands, octahydrofluorenyl ligands, cyclooctatetraendiyl ligands, azenyl ligands and borabenzene ligands, and the like, including hydrogenated versions thereof. Also, L^{A} and L^{B} may be any other ligand structure capable of η-5 bonding to M, for example L^{A} and L^{B} may comprise one or more heteroatoms, for example, nitrogen, silicon, boron, germanium, and phosphorous, in combination with carbon atoms to form a cyclic structure, for example a heterocyclopentadienyl ancillary ligand in which the valencies of the heteroatoms(s) which do not participate in the cyclic structure are saturated with hydrogen, methyl, ethyl, n-propyl, isopropyl, n-butyl, tert-butyl, phenyl or benzyl. Further, each of L^{A} and L^{B} may also be other types of ligands including but not limited to amides, phosphides, alkoxides, aryloxides, imides, carbolides, borollides, porphyrins, phthalocyanines, corrins and other polyazomacrocycles. Each L^{A} and L^{B} may be the same or different type of ligand that is π-bonded to M.

Each L^{A} and L^{B} may be substituted with a combination of substituent groups R. Non-limiting examples of substituent groups R include hydrogen or linear, branched, alkyl radicals or cyclic alkyl, alkenyl, alkynyl or aryl radicals or combination thereof having from 1 to 30 carbon atoms or other substituents having up to 50 non-hydrogen atoms that can also be substituted. Non-limiting examples of alkyl substituents R include methyl, ethyl, propyl, butyl, pentyl, hexyl, cyclopentyl, cyclohexyl, benzyl or phenyl groups, halogens and the like, including all their isomers, for example tertiary butyl, isopropyl, etc. Other hydrocarbyl radicals include fluoromethyl, fluroethyl, difluroethyl, iodopropyl, bromohexyl, chlorobenzyl and hydrocarbyl substituted organometalloid radicals including trimethylsilyl, trimethylgermyl, methyldiethylsilyl and the like; and halocarbyl-substituted organometalloid radicals including tris(trifluoromethyl)-silyl, methyl-bis(difluoromethyl)silyl, bromomethyldimethylgermyl and the like; and disubstitiuted boron radicals including dimethylboron for example; and disubstituted pnictogen radicals including dimethylamine, dimethylphosphine, diphenylamine, methylphenylphosphine, chalcogen radicals including methoxy, ethoxy, propoxy, phenoxy, methylsulfide and ethylsulfide. Non-hydrogen substituents R include the atoms carbon, silicon, nitrogen, phosphorous, oxygen, tin, germanium and the like including olefins such as but not limited to olefinically unsaturated substituents including vinyl-terminated ligands, for example but-3-enyl, 2-vinyl, or hexene-1. Also, at least two R groups, preferably two adjacent R groups are joined to form a ring structure having from 4 to 30 atoms selected from carbon, nitrogen, oxygen, phosphorous, silicon, germanium, boron or a combination thereof. Also, an R group such as 1-butanyl may form a carbon sigma bond to the metal M.

Other ligands may be bonded to the transition metal, such as a leaving group Q. Q may be independently monoanionic labile ligands having a sigma-bond to M. Non-limiting examples of Q include weak bases such as amines, phosphines, ether, carboxylates, dienes, hydrocarbyl radicals having from 1 to 20 carbon atoms, hydrides or halogens and the like, and combinations thereof. Other examples of Q radicals include those substituents for R as described above and including cyclohexyl, heptyl, tolyl, trifluromethyl, tetramethylene and pentamethylene, methylidene, methoxy, ethoxy, propoxy, phenoxy, bis(N-methylanilide), dimethylamide, dimethylphosphide radicals and the like.

In addition, single site catalysts of the invention include those in which L^{A} and L^{B} are bridged to each other by a bridging group A. These bridged compounds are known as bridged single site catalysts. Non-limiting examples of bridging group A include bridging radicals containing, but not limited to, carbon, oxygen, nitrogen, silicon, germanium and tin, preferably carbon, silicon and germanium, most preferably silicon and carbon. The residual valencies of the bridging atom(s) are occupied by hydrogen, C₁ to C₆-alkyls, for example methyl, ethyl, n-propyl, isopropyl, n-butyl, or t-butyl, or phenyl, benzyl and tolyl. Other non-limiting examples of bridging groups A include dimethylsilyl, diethylsilyl, methylethylsilyl, trifluoromethylbutylsilyl, bis(trifluoromethyl)silyl, di-n-butylsilyl, silylcyclobutyl, diiso-propylsilyl, dicyclohexylsilyl, diphenylsilyl, cyclohexylphenylsilyl, t-butylcyclohexylsilyl, di-t-butylphenylsilyl, di(p-tolyl)silyl, dimethylgermyl, diethylgermyl, methylene, dimethylmethylene, diphenylmethylene, ethylene, 1-2-dimethylethylene, 1,2-diphenylethylene, 1,1,2,2-tetramethylethylene, dimethylmethylenedimethylsilyl, methylenediphenylgermyl, methylamine, phenylamine, cyclohexylamine, methylphosphine, phenylphosphine, cyclohexylphosphine and the like.

In another embodiment, the single site catalyst of the invention is represented by the formula:

(C₅H_{4-d}R_{d})Aₓ(C₅H_{4-d}R_{d})M Q_{g-2} (II)

wherein M is a Group 4, 5 , 6 transition metal, (C₅H_{4-d}R_{d}) is an unsubstituted or substituted cyclopentadienyl derived ligand bonded to M, each R, which can be the same or different, is hydrogen or a substituent group containing up to 50 non-hydrogen atoms or substituted or unsubstituted hydrocarbyl having from 1 to 30 carbon atoms or combinations thereof, or two or more carbon atoms are joined together to form a part of a substituted or unsubstituted ring or ring system having 4 to 30 carbon atoms, A is one or more of, or a combination of carbon, germanium, silicon, tin, phosphorous or nitrogen atom containing radical bridging two (C₅H_{4-d}R_{d}) rings; more particularly, non-limiting examples of A may be represented by R'₂C, R'₂Si, R'₂Si R'₂Si, R'₂Si R'₂C, R'₂Ge, R'₂Ge, R'₂Si R'₂Ge, R'₂GeR'₂C, RN, R'P, R'₂C RN, R'₂C R'P, R'₂Si R'N, R'₂Si R'P, R'₂GeR'N, R'₂Ge R'P, where R' is independently, a radical group which is hydride, C₁₋₃₀-hydrocarbyl, substituted hydrocarbyl, halocarbyl, substituted halocarbyl, hydrocarbyl-substituted organometalloid, halocarbyl-substituted organometalloid, disubstituted boron, disubstituted pnictogen, substituted chalcogen, or halogen; each Q which can be the same or different is a hydride, substituted or unsubstituted, linear, cyclic or branched, hydrocarbyl having from 1 to 30 carbon atoms, halogen, alkoxides, aryloxides, amides, phosphides, or any other univalent anionic ligand or combination thereof; also, two Q's together may form an alkylidene ligand or cyclometallated hydrocarbyl ligand or other divalent anionic chelating ligand, where g is an integer corresponding to the formal oxidation state of M, and d is an integer selected from the 0, 1, 2, 3 or 4 and denoting the degree of substitution and x is an integer from 0 to 1.

In one embodiment, the single site catalysts are those where the R substituents on the ligands L^{A}, L^{B}, (C₅H_{4-d}R_{d}) of formulas (I) and (II) are substituted with the same or different number of substituents on each of the ligands.

In a preferred embodiment, the ligand of the single site catalyst is represented by formula (II), where x is 1.

Other single site catalysts compounds useful in the invention include bridged, mono- heteroatom containing single site compounds. These types of catalysts and catalyst systems are described in, for example, PCT publication WO 92/00333, WO 94/07928, WO 91/ 04257, WO 94/03506, WO96/00244 and WO 97/15602 and U.S. Patent Nos. 5,057,475, 5,096,867, 5,055,438, 5,198,401, 5,227,440 and 5,264,405 and European publication EP-A-0 420 436, all of which are herein fully incorporated by reference. Other single site catalysts useful in the invention may include those described in U.S. Patent Nos. 5,064,802, 5,145,819, 5,149,819, 5,243,001, 5,239,022, 5,276,208, 5,296,434, 5,321,106, 5,329,031, 5,304,614, 5,677,401 and 5,723,398 and PCT publications WO 93/08221, WO 93/08199, WO 95/07140, WO 98/11144 and European publications EP-A-0 578 838, EP-A-0 638 595, EP-B-0 513 380 and EP-A1-0 816 372, all of which are herein fully incorporated by reference.

In another embodiment of this invention the bridged, heteroatom containing single site catalysts useful in the invention are represented by the formula: 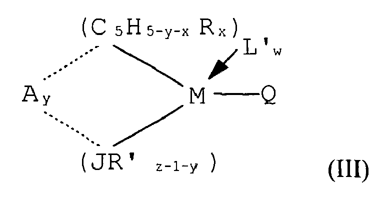 wherein M is Ti, Zr or Hf; (C₅H_{5-y-x}Rₓ) is a cyclopentadienyl ring or ring system which is substituted with from 0 to 5 substituent groups R, "x" is 0, 1, 2, 3, 4 or 5 denoting the degree of substitution, and each substituent group R is, independently, a radical selected from a group consisting of C₁-C₂₀ hydrocarbyl radicals, substituted C₁-C₂₀ hydrocarbyl radicals wherein one or more hydrogen atoms is replaced by a halogen atom, C₁-C₂₀ hydrocarbyl-substituted metalloid radicals wherein the metalloid is selected from the Group 14 of the Periodic Table of Elements, and halogen radicals or (C₅H_{5-y-x}Rₓ) is a cyclopentadienyl ring in which two adjacent R-groups are joined forming C₄-C₂₀ ring to give a saturated or unsaturated polycyclic cyclopentadienyl ligand such as indenyl, tetrahydroindenyl, fluorenyl or octahydrofluorenyl;
(JR'_{z-1-y}) is a heteroatom ligand in which J is an element with a coordination number of three from Group 15 or an element with a coordination number of two from Group 16 of the Periodic Table of Elements, preferably nitrogen, phosphorus, oxygen or sulfur with nitrogen being preferred, and each R' is, independently a radical selected from a group consisting of C₁-C₂₀ hydrocarbyl radicals wherein one or more hydrogen atoms is replaced by a halogen atom, y is 0 or 1, and "z" is the coordination number of the element J;
each Q is, independently any univalent anionic ligand such as halogen, hydride, or substituted or unsubstituted C₁-C₃₀ hydrocarbyl, alkoxide, aryloxide, amide or phosphide, provided that two Q may be an alkylidene, a cyclometallated hydrocarbyl or any other divalent anionic chelating ligand; and n may be 0,1 or 2;
A is a covalent bridging group containing a Group 15 or 14 element such as, but not limited to, a dialkyl, alkylaryl or diaryl silicon or germanium radical, alkyl or aryl phosphine or amine radical, or a hydrocarbyl radical such as methylene, ethylene and the like;
L' is a Lewis base such as diethylether, tetraethylammonium chloride, tetrahydrofuran, dimethylaniline, aniline, trimethylphosphine, n-butylamine, and the like; and w is a number from 0 to 3. Additionally, L' may be bonded to any of R, R' or Q and n is 0, 1, 2 or 3.

In another embodiment, the single site catalyst is a complex of a transition metal, a substituted or unsubstituted pi-bonded ligand, and one or more heteroallyl moieties, such as those described in U.S. Patent No. 5,527,752 and 5,747,406 and EP-B1-0 735 057, all of which are herein fully incorporated by reference.

Preferably, the single site catalyst, the monocycloalkadienyl catalyst, may be represented by one of the following formulas: 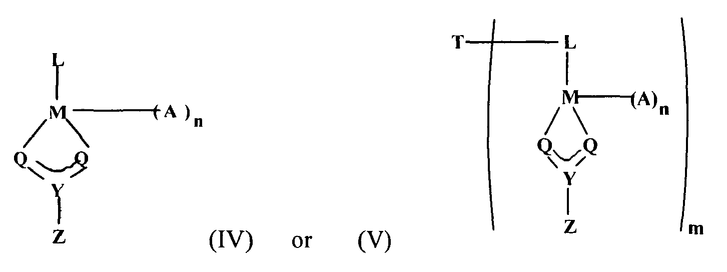 wherein M is a transition metal from Group 4, 5 or 6, preferably titanium zirconium or hafnium, most preferably zirconium or hafnium; L is a substituted or unsubstituted, pi-bonded ligand coordinated to M, preferably L is a cycloalkadienyl ligand, for example cyclopentadienyl, indenyl or fluorenyl ligands, optionally with one or more hydrocarbyl substituent groups having from 1 to 20 carbon atoms; each Q is independently selected from the group consisting of -O-, -NR-, -CR₂- and -S-, preferably oxygen; Y is either C or S, preferably carbon; Z is selected from the group consisting of -OR, -NR₂, -CR₃, -SR, -SiR₃, -PR₂, -H, and substituted or unsubstituted aryl groups, with the proviso that when Q is -NR- then Z is selected from the group consisting of -OR, -NR₂, -SR, -SiR₃, -PR₂ and -H, preferably Z is selected from the group consisting of-OR, -CR₃ and -NR₂; n is 1 or 2, preferably 1; A is a univalent anionic group when n is 2 or A is a divalent anionic group when n is 1, preferably A is a carbamate, carboxylate, or other heteroallyl moiety described by the Q, Y and Z combination; and each R is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl, or an aryl group and one or more may be attached to the L substituent; and T is a bridging group selected from the group consisting of alkylene and arylene groups containing from 1 to 10 carbon atoms optionally substituted with carbon or heteroatom(s), germanium, silicon and alkyl phosphine; and m is 2 to 7, preferably 2 to 6, most preferably 2 or 3.

In formulas (IV) and (V), the supportive substituent formed by Q, Y and Z is a unicharged polydentate ligand exerting electronic effects due to its high polarizability, similar to the cyclopentadienyl ligand. In the most preferred embodiments of this invention, the disubstituted carbamates and the carboxylates are employed. Non-limiting examples of these single site catalysts include indenyl zirconium tris(diethylcarbamate), indenyl zirconium tris(trimethylacetate), indenyl zirconium tris(p-toluate), indenyl zirconium tris(benzoate), (1-methylindenyl)zirconium tris(trimethylacetate), (2-methylindenyl) zirconium tris(diethylcarbamate), (methylcyclopentadienyl) zirconium tris(trimethylacetate), cyclopentadienyl tris(trimethylacetate), tetrahydroindenyl zirconium tris(trimethylacetate), and (pentamethyl-cyclopentadienyl) zirconium tris(benzoate). Preferred examples are indenyl zirconium tris(diethylcarbamate), indenyl zirconium tris(trimethylacetate), and (methylcyclopentadienyl) zirconium tris(trimethylacetate).

In another embodiment the single site catalysts are those nitrogen containing heterocyclic ligand complexes, also known as transition metal catalysts based on bidentate ligands containing pyridine or quinoline moieties, such as those described in WO 96/33202, WO 99/01481 and WO 98/42664 and U.S. Patent No. 5,637,660, which are herein all incorporated by reference.

In another preferred embodiment the single site catalysts are those metallocenes which are disclosed in FI-A-9349167 and are based on a complex of formula X₂HfCp₂ wherein each X is independently halogen (fluoro, chloro or bromo), methyl, benzyl, amido or hydrogen; each Cp is independently a cyclopentadienyl substituted by a C₁₋₁₀ linear or branched hydrocarbyl group. Especially preferably the metallocene is a bis(n-butylcyclopentadienyl) zirconium dihalide and bis(n-butylcyclopentadienyl) hafnium dihalide.

In yet another preferred embodiment the single site catalysts are those metallocenes which are disclosed in FI-A-960437, i.e. a siloxy-substituted bridged bisindenyl zirconium dihalide (halide = fluoride, chloride or bromide).

It is within the scope of this invention, in one embodiment, that single site catalyst complexes of Ni²⁺ and Pd²⁺ described in the articles Johnson, et al., "New Pd(II)- and Ni(II)- Based Catalysts for Polymerization of Ethylene and a-Olefins", J. Am. Chem. Soc. 1995, 117, 6414-6415 and Johnson, et al., "Copolymerization of Ethylene and Propylene with Functionalized Vinyl Monomers by Palladium(II) Catalysts", J. Am. Chem. Soc., 1996, 118, 267-268, and WO 96/23010 published August 1, 1996, which are all herein fully incorporated by reference, may be combined with a carboxylate metal salt for use in the process of invention. These complexes can be either dialkyl ether adducts, or alkylated reaction products of the described dihalide complexes that can be activated to a cationic state by the conventional-type cocatalysts or the activators of this invention described below.

Also included as single site catalysts are those diimine based ligands for Group 8 to 10 metal compounds disclosed in PCT publications WO 96/23010 and WO 97/48735 and Gibson, et. al., Chem. Comm., pp. 849-850 (1998), all of which are herein incorporated by reference.

Other single site catalysts are those Group 5 and 6 metal imido complexes described in EP-A2-0 816 384 and U.S. Patent No. 5,851,945, which is incorporated herein by reference. In addition, single site catalysts include bridged bis(arylamido) Group 4 compounds described by D.H. McConville, et al., in Organometallics 1195, 14, 5478-5480, which is herein incorporated by reference. Other single site catalysts are described as bis(hydroxy aromatic nitrogen ligands) in U.S. Patent No. 5,852,146, which is incorporated herein by reference. Other single site catalysts containing one or more Group 15 atoms include those described in WO 98/46651, which is herein incorporated herein by reference. Still another single site catalysts include those multinuclear single site catalysts as described in WO 99/20665, which is incorporated herein by reference.

It is contemplated in some embodiments that the ligands of the single site catalysts of the invention described above may be asymmetrically substituted in terms of additional substituents or types of substituents, and/or unbalanced in terms of the number of additional substituents on the ligands or the ligands themselves are different.

It is also contemplated that in one embodiment, the ligand single site catalysts of the invention include their structural or optical or enantiomeric isomers (meso and racemic isomers) and mixtures thereof. In another embodiment the single site compounds of the invention may be chiral and/or a bridged single site catalyst.

In another preferred embodiment the single site catalysts are selected from the metallocene catalysts containing an indenyl moiety substituted at the 4-, 5-, 6- or 7 position by a siloxy or germyloxy group which are disclosed in WO03/000744 and the metallocene catalysts having bicyclic nitrogen ligands disclosed in WO02/016374 and the triaza transition metal complexes disclosed in WO00/050170) which are all fully incorporated herein by reference.

### Activator of the invention

The above described single site catalysts are typically activated in various ways to yield catalysts having a vacant coordination site that will coordinate, insert, and polymerize olefin(s).

For the purposes of this patent specification and appended claims, the term "activator" is defined to be any compound or component or method which can activate any of the single site catalysts described above. Non-limiting activators, for example may include a Lewis acid or a non-coordinating ionic activator or ionizing activator or any other compounds including Lewis bases, aluminum alkyls, conventional-type cocatalysts (previously described herein) and combinations thereof that can convert a neutral single site catalyst to a catalytically active single site cation. Non-limiting examples of aluminum alkyls include trimethylaluminum, triethylaluminum, triisobutylaluminum, tri-n-hexylaluminum, tri-n-octylaluminum and the like. Aluminium dialkyl halides (e.g. diethyl aluminium chloride (DEAC) may also be used. It is within the scope of this invention to use alumoxane or modified alumoxane as an activator, and/or to also use ionizing activators, neutral or ionic, such as tri (n-butyl) ammonium tetrakis (pentafluorophenyl) boron, a trisperfluorophenyl boron metalloid precursor or a trisperfluoronaphtyl boron metalloid precursor, polyhalogenated heteroborane anions (WO 98/43983) or combination thereof, that would ionize the neutral single site catalyst.

In one embodiment, an activation method using ionizing ionic compounds not containing an active proton but capable of producing both a single site catalyst cation and a noncoordinating anion are also contemplated, and are described in EP-A-0 426 637, EP-A-0 573 403 and U.S. Patent No. 5,387,568, which are all herein incorporated by reference.

There are a variety of methods for preparing alumoxane and modified alumoxanes, non-limiting examples of which are described in U.S. Patent No. 4,665,208, 4,952,540, 5,091,352, 5,206,199, 5,204,419, 4,874,734, 4,924,018, 4,908,463, 4,968,827, 5,308,815, 5,329,032, 5,248,801, 5,235,081, 5,157,137, 5,103,031, 5,391,793, 5,391,529, 5,693,838, 5,731,253, 5,731,451 5,744,656 and European publications EP-A-0 561 476, EP-B1-0 279 586 and EP-A-0 594-218, and PCT publication WO 94/10180, all of which are herein fully incorporated by reference.

Ionizing compounds may contain an active proton, or some other cation associated with but not coordinated to or only loosely coordinated to the remaining ion of the ionizing compound. Such compounds and the like are described in European publications EP-A-0 570 982, EP-A-0 520 732, EP-A-0 495 375, EP-A-500 944, EP-A-0 277 003 and EP-A-0 277 004, and U.S. Patent Nos. 5,153,157, 5,198,401, 5,066,741, 5,206,197, 5,241,025, 5,384,299 and 5,502,124 and U.S. Patent Application Serial No. 08/285,380, filed August 3, 1994, all of which are herein fully incorporated by reference.

Other activators include those described in PCT publication WO 98/07515 such as tris(2,2',2"-nonafluorobiphenyl) fluoroaluminate, which publication is fully incorporated herein by reference. Combinations of activators are also contemplated by the invention, for example, alumoxanes and ionizing activators in combinations, see for example, EP-B1 0 573 120, PCT publications WO 94/07928 and WO 95/14044 and U.S. Patent Nos. 5,153,157 and 5,453,410 all of which are herein fully incorporated by reference. WO 98/09996 incorporated herein by reference describes activating single site catalysts with perchlorates, periodates and iodates including their hydrates. WO 98/30602 and WO 98/30603 incorporated by reference describe the use of lithium (2,2'-bisphenyl-ditrimethylsilicate)•4THF as an activator for a single site catalyst. WO 99/18135 incorporated herein by reference describes the use of organo-boron-aluminum acitivators. EP-B1-0 781 299 describes using a silylium salt in combination with a non-coordinating compatible anion. Also, methods of activation such as using radiation (see EP-B1-0 615 981 herein incorporated by reference), electro-chemical oxidation, and the like are also contemplated as activating methods for the purposes of rendering the neutral single site catalyst or precursor to a single site cation capable of polymerizing olefins. Other activators or methods for activating a single site catalyst are described in for example, U.S. Patent Nos. 5,849,852, 5,859,653 and 5,869,723 and PCT WO 98/32775, which are herein incorporated by reference.

Preferably, alumoxanes, particularly methylalumoxane or modified methylalumoxane, isobutylalumoxane, eg TIBAO (tetraisobutylalumoxane) or HIBAO (hexaisobutylalumoxane) are used as activators.

The mole ratio of the metal of the activator component to the metal of the single site catalysts are in the range of between 0.3:1 to 2000:1, preferably 20:1 to 800:1, and most preferably 50:1 to 500:1. Where the activator is an ionizing activator such as those based on the anion tetrakis(pentafluorophenyl)boron, the mole ratio of the metal of the activator component to the metal component of the catalyst is preferably in the range of between 0.3:1 to 3:1.

### Mixed catalysts of the invention

It is also within the scope of this invention that the above described single site catalysts can be combined with one or more of the catalysts represented by formula (I), (II), (III), (IV) and (V) with one or more activators or activation methods described above.

It is further contemplated by the invention that other catalysts can be combined with the single site catalysts of the invention. For example, see U.S. Patent Nos. 4,937,299, 4,935,474, 5,281,679, 5,359,015, 5,470,811, and 5,719,241 all of which are herein fully incorporated herein reference.

In another embodiment of the invention one or more single site catalysts or catalyst systems may be used in combination with one or more conventional-type catalysts or catalyst systems. Non-limiting examples of mixed catalysts and catalyst systems are described in U.S. Patent Nos. 4,159,965, 4,325,837, 4,701,432, 5,124,418, 5,077,255, 5,183,867, 5,391,660, 5,395,810, 5,691,264, 5,723,399 and 5,767,031 and PCT Publication WO 96/23010 published August 1, 1996, all of which are herein fully incorporated by reference.

It is further contemplated that two or more conventional-type transition metal catalysts may be combined with one or more conventional-type cocatalysts. Non-limiting examples of mixed conventional-type transition metal catalysts are described in for example U.S. Patent Nos. 4,154,701, 4,210,559, 4,263,422, 4,672,096, 4,918,038, 5,198,400, 5,237,025, 5,408,015 and 5,420,090, all of which are herein incorporated by reference.

### Catalyst support of the invention

The above described single site catalysts and conventional-type transition metal catalysts may be combined with one or more support materials or carriers using one of the support methods well known in the art or as described below. For example, in a most preferred embodiment, a single site catalyst is for example deposited on, contacted with, or incorporated within, adsorbed or absorbed in a support or carrier.

The terms "support" or "carrier" are used interchangeably and are any porous or non-porous support material, preferably a porous support material, for example, talc, inorganic oxides and inorganic chlorides. Other carriers include resinous support materials such as polystyrene, a functionalized or crosslinked organic supports, such as polystyrene divinyl benzene polyolefins or polymeric compounds, or any other organic or inorganic support material and the like, or mixtures thereof.

The preferred carriers are inorganic oxides that include those Group IIA, IIIB, IVB. VB, IIIA or IVA metal oxides. Examples of the preferred supports include silica, alumina, silica-alumina, magnesium chloride, and mixtures thereof. Other useful supports include magnesia, titania, zirconia, montmorillonite and the like. Also, combinations of these support materials may be used, for example, silica-chromium and silica-titania.

It is preferred that the carrier, most preferably an inorganic oxide, has a surface area in the range of from about 10 to about 700 m²/g, pore volume in the range of from about 0.1 to about 4.0 cm³/g and average particle size in the range of from about 10 to about 500 µm. More preferably, the surface area of the carrier is in the range of from about 50 to about 500 m²/g, pore volume of from about 0.5 to about 3.5 cm³/g and average particle size of from about 20 to about 200 µm. Most preferably the surface area of the carrier is in the range of from about 100 to about 400 m²/g, pore volume from about 0.8 to about 3.0 cm³/g and average particle size is from about 20 to about 100 µm. The average pore size of a carrier is typically in the range of from about 10 Å to 1000Å, preferably 50 Å to about 500Å, and most preferably 75 Å to about 350Å.

In the case of an inorganic oxide support it is further preferred that the support is calcined, i.e. heat treated under air and then with a non-reactive gas such as nitrogen. This treatment is preferably at a temperature in excess of 100 °C, more preferably 200 °C or higher, e.g. 200-800 °C, particularly about 600 °C. The calcination treatment is preferably effected for several hours, e.g. 2 to 30 hours, more preferably about 10 hours.

The support may also be treated with an alkylating agent before being loaded with the catalyst. Treatment with the alkylating agent may be effected using an alkylating agent in a gas or liquid phase, e.g. in an organic solvent for the alkylating agent. The alkylating agent may be any agent capable of introducing alkyl groups, preferably C1-6 alkyl groups and most especially preferably methyl groups. Such agents are well known in the field of synthetic organic chemistry. Preferably the alkylating agent is an organometallic compound, especially an organoaluminium compound (such as trimethylaluminium (TMA), dimethyl aluminium chloride, triethylaluminium) or a compound such as methyl lithium, dimethyl magnesium, triethylboron, diethylzinc etc.

The quantity of alkylating agent used will depend upon the number of active sites on the surface of the carrier. Thus for example, for a silica support, surface hydroxyls are capable of reacting with the alkylating agent. In general, an excess of alkylating agent is preferably used with any unreacted alkylating agent subsequently being washed away.

Examples of supporting the catalysts are also described in U.S. Patent Nos. 4,701,432, 4,808,561, 4,912,075, 4,925,821, 4,937,217, 5,008,228, 5,238,892, 5,240,894, 5,332,706, 5,346,925, 5,422,325, 5,466,649, 5,466,766, 5,468,702, 5,529,965, 5,554,704, 5,629,253, 5,639,835, 5,625,015, 5,643,847, 5,665,665, 5,698,487, 5,714,424, 5,723,400, 5,723,402, 5,731,261, 5,759,940, 5,767,032 and 5,770,664 and U.S. Application Serial Nos. 271,598 filed July 7, 1994 and 788,736 filed January 23, 1997 and PCT publications WO 95/32995, WO 95/14044, WO 96/06187 and WO 97/02297 all of which are herein fully incorporated by reference. The catalyst may contain a polymer bound ligand as described in U.S. Patent Nos. 5,473,202 and 5,770,755, which is herein fully incorporated by reference; the single site catalyst may be spray dried as described in U.S. Patent No. 5,648,310, which is herein fully incorporated by reference; the support used with the single site catalyst system of the invention is functionalized as described in European publication EP-A-0 802 203, which is herein fully incorporated by reference; or at least one substituent or leaving group is selected as described in U.S. Patent No. 5,688,880, which is herein fully incorporated by reference.

Especially preferred the support is a porous material so that the catalyst may be loaded into the pores of the support, e.g. using a process analogous to those described in WO94/14856, WO95/12622 and WO96/00243, all of which are herein incorporated by reference.

Examples of supporting the conventional-type catalyst are described in U.S. Patent No. 4,894,424, 4,376,062, 4,395,359, 4,379,759, 4,405,495 4,540758 and 5,096,869, all of which are herein incorporated by reference.

It is contemplated that the catalysts may be deposited on the same or separate supports together with an activator, or the activator may be used in an unsupported form, or may be deposited on a support different from the supported catalysts, or any combination thereof.

In a preferred method for producing the supported single site catalyst system of the invention the single site catalyst is slurried in a liquid to form a metallocene solution and a separate solution is formed containing an activator and a liquid. The liquid may be any compatible solvent or other liquid capable of forming a solution or the like with the single site catalysts and/or activator of the invention. In the most preferred embodiment the liquid is a cyclic aliphatic or aromatic hydrocarbon, most preferably toluene. The single site catalyst and activator solutions are mixed together and added to a porous support or the porous support is added to the solutions such that the total volume of the single site catalyst solution and the activator solution or the single site catalyst and activator solution is less than five times the pore volume of the porous support, more preferably less than four times, even more preferably less than three times; preferred ranges being from 1.1 times to 3.5 times range and most preferably in the 1.2 to 3 times range. Procedures for measuring the total pore volume of a porous support are well known in the art. Details of one of these procedures is discussed in Volume 1, Experimental Methods in Catalytic Research (Academic Press, 1968) (specifically see pages 67-96). This preferred procedure involves the use of a classical BET apparatus for nitrogen absorption. Another method well known in the art is described in Innes, Total Porosity and Particle Density of Fluid Catalysts By Liquid Titration, Vol. 28, No. 3, Analytical Chemistry 332-334 (March, 1956). Subsequently the catalyst composition can be dried in a vacuum or dry inert gas stream or it can be spray dried.

In one embodiment of the invention, olefin(s), preferably C₂ to C₃₀ olefin(s) or alphaolefin(s), preferably ethylene or propylene or combinations thereof are prepolymerized in the presence of the single site catalyst system and/or a conventional-type transition metal catalysts of the invention prior to the main polymerization. The prepolymerization can be carried out batchwise or continuously in gas, solution or slurry phase including at elevated pressures. The prepolymerization can take place with any olefin monomer or combination and/or in the presence of any molecular weight controlling agent such as hydrogen. For examples of prepolymerization procedures, see U.S. Patent Nos. 4,748,221, 4,789,359, 4,923,833, 4,921,825, 5,283,278 and 5,705,578 and European publication EP-B-0279 863 and PCT Publication WO 97/44371 all of which are herein fully incorporated by reference. A prepolymerized catalyst system for purposes of this patent specification and appended claim is a supported catalyst system.

The catalyst is preferably loaded onto the support material at from 0.1 to 4%, preferably 0.5 to 3.0%, especially 1.0 to 2.0%, by weight of active metal relative to the dry weight of the support material.

### Catalyst surface modifier of the invention

The catalyst surface modifier is used to modify the surface of the catalyst either prior to the introduction of the catalyst into the polymerization reactor or in the reactor itself. The catalyst surface modifier is defined herein as a compound having a polar residue capable of interacting with the surface of the catalyst composition and a lipophilic residue and which is further selected from carboxylate metal salts, nitrogen containing catalyst surface modifiers, phosphorus containing catalyst surface modifiers, oxygen containing catalyst surface modifiers, sulfur containing catalyst surface modifiers, fluoro containing polymeric catalyst surface modifiers or mixtures thereof.

### Carboxylate Metal Salt

For the purposes of this patent specification and appended claims the term "carboxylate metal salt" is any mono- or di- or tri-carboxylic acid salt with a metal portion from the Periodic Table of Elements. Non-limiting examples include saturated, unsaturated, aliphatic, aromatic or saturated cyclic carboxylic acid salts where the carboxylate ligand has preferably from 2 to 24 carbon atoms, such as acetate, propionate, butyrate, valerate, pivalate, caproate, isobuytlacetate, t-butyl-acetate, caprylate, heptanate, pelargonate, undecanoate, oleate, octoate, palmitate, myristate, margarate, stearate, arachate and tercosanoate. Non-limiting examples of the metal portion includes a metal from the Periodic Table of Elements selected from the group of Al, Mg, Ca, Sr, Sn, Ti, V, Ba, Zn, Cd, Hg, Mn, Fe, Co, Ni, Pd, Li and Na.

In one embodiment, the carboxylate metal salt is represented by the following general formula:

M(Q)_{X}(OOCR)_{Y}

where M is a metal from Groups 1 to 16 and the Lanthanide and Actinide series, preferably from Groups 1 to 7 and 12 to 16, more preferably from Groups 3 to 7 and 12 to 16, even more preferably Groups 2 and 12 and 13, and most preferably Group 12 and 13; Q is halogen, hydrogen, a hydroxy or hydroxide, alkyl, alkoxy, aryloxy, siloxy, silane sulfonate group or siloxane; R is a hydrocarbyl radical having from 2 to 100 carbon atoms, preferably 4 to 50 carbon atoms; and x is an integer from 0 to 3 and y is an integer from 1 to 4 and the sum of x and y is equal to the valence of the metal. In a preferred embodiment of the above formula y is an integer from 1 to 3, preferably 1 to 2.

Non-limiting examples of R in the above formula include hydrocarbyl radicals having 2 to 100 carbon atoms that include alkyl, aryl, aromatic, aliphatic, cyclic, saturated or unsaturated hydrocarbyl radicals. In an embodiment of the invention, R is a hydrocarbyl radical having greater than or equal to 8 carbon atoms, preferably greater than or equal to 12 carbon atoms and more preferably greater than or equal to 17 carbon atoms. In another embodiment R is a hydrocarbyl radical having from 17 to 90 carbon atoms, preferably 17 to 72, and most preferably from 17 to 54 carbon atoms.

Non-limiting examples of Q in the above formula include one or more, same or different, hydrocarbon containing group such as alkyl, cycloalkyl, aryl, alkenyl, arylalkyl, arylalkenyl or alkylaryl, alkylsilane, arylsilane, alkylamine, arylamine, alkyl phosphide, alkoxy having from 1 to 30, preferably 8 to 24, more preferably 12 to 18, carbon atoms. The hydrocarbon containing group may be linear, branched, or even substituted. Also, Q in one embodiment is an inorganic group such as a halide, sulfate or phosphate.

In one embodiment, the more preferred carboxylate metal salts are those aluminum carboxylates such as aluminum mono, di- and tri- stearates, aluminum octoates, oleates and cyclo-hexylbutyrates. In a more preferred embodiment, the carboxylate metal salt is (CH₃(CH₂)₁₆COO)₃Al, a aluminum tri-stearate (preferred melting point 115°C), (CH₃(CH₂)₁₆COO)₂-Al-OH, a aluminum di-stearate (preferred melting point 145°C), and a CH₃(CH₂)₁₆COO-Al(OH)₂, an aluminum mono-stearate (preferred melting point 155°C).

In one embodiment the carboxylate metal salt has a melting point from about 30 °C to about 250 °C, more preferably from about 37 °C to about 220 °C, even more preferably from about 50 °C to about 200 °C, and most preferably from about 100 °C to about 200 °C. In a most preferred embodiment, the carboxylate metal salt is an aluminum stearate having a melting point in the range of from about 135 °C to about 165 °C.

In another preferred embodiment the carboxylate metal salt has a melting point greater than the polymerization temperature in the reactor.

Other examples of carboxylate metal salts include titanium stearates, tin stearates, calcium stearates, zinc stearates, boron stearate and strontium stearates.

### Nitrogen containing catalyst surface modifier

The nitrogen containing catalyst surface modifier are defined herein as any organic compound containing at least one nitrogen atom in addition to at least one hydrocarbyl moiety. The nitrogen containing catalyst surface modifier may also contain one or more hydrogen atoms attached to the nitrogen atom. The hydrocarbyl moiety should have a molecular weight sufficient to give it solubility in typical hydrocarbon solvents such as cyclic aliphatic or aromatic hydrocarbons. More specifically, the nitrogen containing catalyst surface modifier can be selected. Furthermore, the hydrocarbyl moiety can be substituted with one or more hydroxyl groups. The nitrogen containing catalyst surface modifier can be represented by the formula RₘNHₙ where R may be a branched or straight chain hydrocarbyl group or substituted hydrocarbyl group or groups having one or more carbon atoms and where N represents a nitrogen atom and H is a hydrogen atom and n is such that the compound has no net charge.

Non limiting examples of nitrogen containing catalyst surface modifiers include the following general structures wherein R, R' and R" represent hydrocarbyl groups and ROH represents a hydrocarbyl groups having at least one hydroxyl substituent: RNH₂, R₂NH, (RC(OH)ₙR')NH₂, (RC(OH)ₙR')₂NH, RCONH₂, RCONHR', RN(R'OH)₂, and RC(O)NR'OH . Preferably R, R' and R" independently from each other represent a hydrocarbyl group having between 6 and 24, more preferably 8 to 20, and most preferably 10 to 18, carbon atoms which may contain unsaturated double bonds.

In another embodiment the nitrogen containing catalyst surface modifier are represented by the following formula:

R¹R²R³N

wherein R¹, R² and R³ represent independently from each other hydrogen, C₁ to C₃₀-alkyl, more preferably C₈ to C₂₄-alkyl, most preferably C₁₂ to C₁₈-alkyl, C₆ to C₃₀-aryl, preferably C₆ to C₂₈-aryl, more preferably C₆ to C₁₂-aryl, C₇ to C₃₀-alkaryl, preferably C₇ to C₁₉-alkaryl, more preferably C₇ to C₁₃-alkaryl. Preferably, the sum of the carbon atoms in the nitrogen containing compounds is at least 18. Examples of R¹, R² and R³ include methyl, ethyl, n-propyl, isoproyl, n-butyl, tert-butyl, pentyl, hexyl, heptyl, octyl, nonyl, decyl, undecyl, dodecyl, hexadecyl, octadecyl, phenyl, benzyl, tolyl, xylyl, and phenylethyl. Optionally, R¹, R² and R³ contain double bonds, ether groups or fluorine atoms. R¹, R² and R³ may further contain one or more hydroxyl groups which may be a direct substituent of the hydrocarbyl moiety R¹, R² and R³ or which may be part of hydroxyl carrying substituent of the hydrocarbyl moiety of R¹, R² and R³. Examples of hydroxyl carrying substituents include substituents which are derived from glycol, glycerol, sorbitan and other sugars. Some or all of the hydroxyl groups may be capped with hydrocarbyl moieties like methyl, ethyl and phenyl groups.

Preferred examples of the nitrogen containing catalyst surface modifier include dodecyl bis(hydroxyethylamine), tetradecyl bis(hydroxyethylamine), hexadecyl bis(hydroxyethylamine), octadecyl bis(hydroxyethylamine), dodecyl bis(hydroxypropylamine), tetradecyl bis(hydroxypropylamine), hexadecyl bis(hydroxypropylamine), octadecyl bis(hydroxypropylamine), 9-octadecanamide, octadecanamide, behenamide, erucamide, N,N'-ethylene-bis-stearmide, N-octadecyl-13-docosenamide, N-9-octadecenylhexadecanamide, N,N'-ethylene-bis-oleamide, N,N'-dicyclohexyl-2,6-naphthalenedicarboxyamide and the like.

### Phosphorus containing catalyst surface modifier

The phosphorus containing catalyst surface modifiers are represented by the following formula:

R¹R²R³P(O)ₙ

wherein R¹, R² and R³ represent independently from each other halogen, hydroxyl, C₁ to C₃₀-alkyl, more preferably C₈ to C₂₄-alkyl, most preferably C₁₂ to C₁₈-alkyl, C₆ to C₃₀-aryl, preferably C₆ to C₂₈-aryl, more preferably C₆ to C₁₂-aryl, C₇ to C₃₀-alkaryl, preferably C₇ to C₁₉-alkaryl, more preferably C₇ to C₁₃-alkaryl, C₁ to C₃₀-alkoxy, preferably C₈ to C₂₄-alkoxy, more preferably C₁₂ to C₁₈-alkoxy, C₆ to C₃₀-aryloxy, preferably C₆ to C₁₈-aryloxy, more preferably C₆ to C₁₂-aryloxy, C₇ to C₃₀-alkaryloxy, preferably C₇ to C₁₉-alkaryloxy, more preferably C₇ to C₁₃-alkaryloxy and n = 0 or 1. Preferably, the sum of the carbon atoms in the phosphorous containing compound is at least 18. Examples of R¹, R² and R³ include methyl, ethyl, n-propyl, isoproyl, n-butyl, tert-butyl, pentyl, hexyl, heptyl, octyl, nonyl, decyl, undecyl, dodecyl, hexadecyl, octadecyl, phenyl, benzyl, tolyl, xylyl, phenylethyl, methoxy, ethoxy, n-propoxy, n-butoxy, tert-butoxy, phenoxy, benzyloxy, 4-tert-butylphenoxy, chloro, fluoro, bromo and iodo. Optionally, R¹, R² and R³ contain double bonds, ether groups or fluorine atoms. R¹, R² and R³ may further contain one or more hydroxyl groups which may be a direct substituent of the hydrocarbyl moiety R¹, R² and R³ or which may be part of hydroxyl carrying substituent of the hydrocarbyl moiety of R¹, R² and R³. Examples of hydroxyl carrying substituents include substituents which are derived from glycol, glycerol, sorbitan and other sugars. Some or all of the hydroxyl groups may be capped with hydrocarbyl moieties like methyl, ethyl and phenyl and benzylidene groups.

Examples of phosphorus containing catalyst surface modifier include triphenylphosphane, triphenoxyposphane, octadecyldiphenylphosphane, hexadecyldiphenylphosphane, octadecyldiphenylphosphane, octyldiphenylphosphane, octadecyldimethylphosphane, dihydroxyloctadecylphosphane, sodium di(4-tert-butylphenoxy)phosphate, sodium 2,2'-methylene bis-(4,6-di-tert.-butylphenoxy)phosphate, hydroxybis(2,4,8,10-tetra-tert.-butyl-6-hydroxy-12H-dibenzo(d,g)(1,3,2)dioxaphosphocin-6-oxidato)aluminium and the like.

### Oxygen containing catalyst surface modifier

The oxygen containing catalyst surface modifiers are defined herein as fatty alcohols or fatty ethers and/or esters of a polyol. Fatty alcohols are defined herein as C₆ to C₂₈-alkanols, preferably C₈ to C₂₄-alkanols, more preferably C₁₀ to C₁₈-alkanols, which may contain double bonds. Examples of fatty alcohols include hexan-1-ol, octan-1-ol, decan-1-ol, dodecan-1-ol, tetradecan-1-ol, hexadecane-1-ol and octadecan-1-ol. Fatty ethers and esters of polyols are defined herein as compounds having at least one RCOO-moiety and/or R'O-moiety which are esterified or etherified to (a) hydroxyl group(s) of the polyol moiety and wherein the polyol moiety contains at least one free hydroxyl group. Suitable residues R of the RCOO-moiety and R' of the R'O-moiety are C₁ to C₂₈-alkyl, preferably C₄ to C₂₄-alkyl, more preferably C₈ to C₁₈-alkyl; C₆ to C₃₀-aryl, preferably C₆ to C₁₈-aryl, more preferably C₆ to C₁₂-aryl; C₇ to C₁₈-alkaryl, preferably C₇ to C₁₈-alkaryl, more preferably C₇ to C₁₃-alkaryl. R and R' may contain double bonds. Suitable polyols are glycol, glycerol, cyclic hydrocarbyl moieties carrying 1, 2, 3 or 4 hydroxyl groups, and sorbitan or other sugar derived polyols, like 2,4-dibenzylidenesorbitol, 2,4-di(4-methylbenzylidene)sorbitol, 2,4-di(4-ethylbenzylidene)-sorbitol, 2,4-di(3,4-dimethylbenzylidene)sorbitol. Preferably, the sum of the carbon atoms in the fatty ether and/or ester of a polyol is at least 18. Examples of fatty ether and/or ester of a polyol include glycol monostearate, glycerol monostearate, glycerol distearate, sorbitan monostearate, sorbitan distearate, glycol monooleate, glycerol dioleate, sorbitan monooleate, sorbitan dioleate, 2,4-dibenzylidenesorbitol, 2,4-di(4-methylbenzylidene)sorbitol, 2,4-di(4-ethylbenzylidene)-sorbitol, 2,4-di(3,4-dimethylbenzylidene)sorbitol, 2,2'-methylidene-bis-6-(1-methylcyclohexyl)para-cresol, 2,2-ethylidenebis(4,6-di-tert.-butylphenol), 2,5,7,8-tetramethyl-2(4',8',12'-trimethyltridecyl)chroman-6-ol, 1,1,3-tris(2-methyl-4-hydroxy-5-tert.-butylphenyl)butane, and the like.

### Sulfur containing catalyst surface modifier

The sulfur containing catalyst surface modifier includes fatty thiols and aromatic thiols. Fatty thiols are defined herein as C₆ to C₂₈-alkanthiols, preferably C₈ to C₂₄-alkanthiols, more preferably C₁₂ to C₁₈-alkanthiols, which may contain double bonds. Examples of fatty alcohols include hexan-1-thiol, octan-1-thiol, decan-1-thiol, dodecan-1-thiol, tetradecan-1-thiol, hexa-decan-1-thiol and octadecan-1-thiol. Examples of aromatic thiols include phenylmercaptane and benzylmercaptane.

### Fluoro containing polymeric catalyst surface modifier

The fluoro containing polymeric catalyst surface modifier include polymers and copolymers derived from fluoro-containing monomers, like 1,1-difluoroethylene and tetrafluoroethylene. Examples include a terpolymer of 1,1,2,3,3,3-hexafluoropolymer, VDF and tetrafluoroethylene, a terpolymer of 1-propene, 1,1,2,3,3,3-hexafluoropolymer and 1,1,-difluorethylene, a blend of 1-propene, 1,1,2,3,3,3-hexafluoropolymer, 1,1,-difluorethylene and polycaprolactone, a blend of 1-propene, 1,1,2,3,3,3-hexafluoropolymer, 1,1,-difluorethylene and polyethylene glycol, and the like.

### Method of Preparing the Catalyst Composition

A catalyst composition is defined herein as a composition comprising at least one catalyst. The steps of preparing the surface-modified catalyst composition comprise contacting at least one catalyst, preferably a supported catalyst, with at least one catalyst surface modifier inside or outside the polymerization reactor. In a preferred method, the surface-modified catalyst composition comprises at least one supported catalyst, at least one catalyst surface modifier, and an activator or cocatalyst.

In one embodiment of the method of the invention the catalyst surface modifier is contacted with the catalyst, preferably a supported catalyst, under ambient temperatures and pressures. Preferably the contact temperature for combining the catalyst and the catalyst surface modifier is in the range of from 0 °C to about 100 °C, more preferably from 15 °C to about 75 °C, most preferably at about ambient temperature and pressure.

In a preferred embodiment, the contacting of the catalyst and the catalyst surface modifier is performed under an inert gaseous atmosphere, such as nitrogen. However, it is contemplated that the combination of the catalyst and the catalyst surface modifier may be performed in the presence of olefin, solvents, hydrogen and the like.

In one embodiment, the catalyst surface modifier may be added at any stage during the preparation of the catalyst composition.

In another preferred embodiment, the supported catalyst and the catalyst surface modifier are combined in the presence of a liquid. For example, the liquid may be a mineral oil, toluene, hexane, isobutane or a mixture thereof. In a more preferred method the catalyst surface modifier is combined with a supported catalyst that has been formed in a liquid, preferably in a slurry, or combined with a substantially dry or dried, supported catalyst that has been placed in a liquid and reslurried.

In another preferred embodiment, the catalyst is supported with an activator in the presence of a liquid, subsequently dried and then contacted with at least one catalyst surface modifier in the presence or absence of a liquid. If necessary, the catalyst composition can then again be dried and reslurried before its use in the polymerization.

In yet another preferred embodiment, a single site catalyst is contacted with a carrier to form a supported catalyst. Separately thereof, an activator or a cocatalyst is contacted with a separate carrier to form a supported activator or supported cocatalyst. The catalyst surface modifier is then mixed with the supported catalyst and/or the supported activator or cocatalyst, separately or in combination, in the presence or absence of a liquid, followed by drying or not drying. If not yet combined, the supported catalyst and the supported cocatalyst can be mixed in the presence or absence of liquid, followed by drying or not drying of the obtained catalyst composition.

In the most preferred embodiment of the method of the invention, the single site catalyst is supported with an activator in the presence of an inert liquid hydrocarbon, subsequently dried or spray dried and then contacted with at least one catalyst surface modifier in the presence of an inert liquid. If necessary, the catalyst composition can then again be dried and reslurried before its use in the polymerization.

In an embodiment, the contact time for the catalyst surface modifier and the catalyst may vary depending on one or more of the conditions, temperature and pressure, the type of mixing apparatus, the quantities of the components to be combined, and even the mechanism for introducing the catalyst/catalyst surface modifier combination into the reactor.

Preferably, the catalyst, preferably a supported single site catalyst, is contacted with a catalyst surface modifier for a period of time from about a second to about 24 hours, preferably from about 1 minute to about 12 hours, more preferably from about 10 minutes to about 10 hours, and most preferably from about 30 minutes to about 8 hours.

In an embodiment, the ratio of the weight of the catalyst surface modifier(s) to the weight of the transition metal of the catalyst is in the range of from 0.01 to 1000, preferably in the range of from 1 to 100, more preferably in the range of from 2 to 50, and most preferably in the range of 4 to 20. In one embodiment, the ratio of the weight of the catalyst surface modifier to the weight of the transition metal of the catalyst is in the range of from 2 to 20, more preferably in the range of from 2 to 12, and most preferably in the range of from 4 to 10.

In another embodiment, the weight percent of the catalyst surface modifier based on the total weight of the catalyst is in the range of from 0.5 weight percent to 500 weight percent, preferably in the range of from 1 weight percent to 25 weight percent, more preferably in the range of from 2 weight percent to 12 weight percent, and most preferably in the range of from 2 weight percent to 10 weight percent. In another embodiment, the weight percent of the catalyst surface modifier based on the total weight of the catalyst is in the range of from 1 to 50 weight percent, preferably in the range of from 2 weight percent to 30 weight percent, and most preferably in the range of from 2 weight percent to 20 weight percent.

Mixing techniques and equipment contemplated for use in the preparation of a catalyst composition are well known. Mixing techniques may involve any mechanical mixing means, for example shaking, stirring, tumbling, and rolling. Another technique contemplated involves the use of fluidization, for example in a fluid bed reactor vessel where circulated gases provide the mixing. Non-limiting examples of mixing equipment for combining include a ribbon blender, a static mixer, a double cone blender, a drum tumbler, a drum roller, a dehydrator, a fluidized bed, a helical mixer and a conical screw mixer.

As a result of using the combination of catalyst and catalyst surface modifier it may be necessary to improve the overall catalyst flow into the reactor. Despite the fact that the catalyst flow is not as good as a catalyst without the catalyst surface modifier, the flowability of the catalyst/catalyst surface modifier combination is not a problem. If catalyst flow needs improvement, it is well known in the art to use bin vibrators, or catalyst feeder brushes and feeder pressure purges and the like.

In another embodiment, the catalyst/catalyst surface modifier combination may be contacted with a liquid, such as mineral oil, and introduced to a polymerization process in a slurry state. In this particular embodiment, it is preferred that the catalyst is a supported catalyst.

In yet another preferred embodiment the final catalyst composition is formed in the polymerization reactor after the separate addition of a catalyst stream from a catalyst feed line and an additive stream comprising the catalyst surface modifier from the additive feed line. It is preferred that in this case the catalyst stream comprises a supported single site catalyst. The catalyst stream and/or the additive stream may further comprise a liquid hydrocarbon as diluent and/or dosing aid.

### Method of olefin polymerization

Any method of olefin polymerization - for example, a gas phase, slurry phase, solution polymerization process or any combinations thereof - that is known for the polymerization of olefins to form polyolefins is suitable for preparing polyolefins to be processed to the films of the present invention.

Polymerization can be a one stage or a two or multistage polymerisation process carried out in at least one polymerisation reactor. Multimodal polymers with respect to the molecular weight distribution (MWD) are produced in a multistage process, where low molecular weight and higher molecular weight polymers are produced in different polymerisation steps, in any order. Different combinations of polymerisation for producing multimodal polymers can be used, e.g. gas-gas phase, slurry-slurry phase, slurry-gas phase prosesses, slurry-gas phase polymerisation being a preferred one. Unimodal polymers can be produced in a one stage polymerisation, although more then one stage is possible, but then polymer with approximately same molecular weight are produced in each stage. Any type of polymerisations as listed above are possible, however, slurry process being one preferred process.

In addition to the actual polymerisation the process configuration can comprise any pre- or post reactors.

The catalyst composition and the cocatalyst or activator may be introduced into the polymerization reactor separately or together or, more preferably they are pre-reacted and their reaction product is introduced into the polymerization reactor.

The catalyst composition and/or the co-catalyst or activator may be introduced into the polymerization reactor by any suitable means regardless of the type of polymerization reactor used. In one embodiment, the catalyst composition is fed to the reactor in a substantially dry state, meaning that the isolated solid form of the catalyst has not been diluted or combined with a diluent prior to entering the reactor. In another embodiment, the catalyst composition is combined with a diluent and fed to the reactor; the diluent in one embodiment is an alkane, such as a C₄ to C₂₀-alkane, toluene, xylene, mineral or silicon oil, or combinations thereof, such as described in, for example, U.S. Pat. No. 5,290,745.

The reactor setup not particularly limited and can be any reactor setup known to the skilled person. Suitable types of reactors and means for operating the reactors are for example described in U.S. Pat. Nos. 4,003,712, 4,588,790, 4,302,566, 5,834,571, 5,352,749, 5,352,749 and 5,462,999 which are all fully incorporated herein by reference.

For slurry reactors, e.g. loop reactors, the reaction temperature will generally be in the range of 50 to 110 °C (e.g. 60 -100, or 70 to 110 °C), the reactor pressure will generally be in the range of 20 to 80 bar (e.g. 30-70 bar), and the residence time will generally be in the range of 0.3 to 5 hours (e.g. 0.5 to 2 hours). The diluent used will generally be an aliphatic hydrocarbon having a boiling point in the range -70 to +100 °C. In such reactors, polymerization may if desired be effected under supercritical conditions.

For gas phase reactors, the reaction temperature used will generally be in the range of 50 to 130 °C (e.g. 60 to 115 °C, or 60 to 100 °C), the reactor pressure will generally be in the range of 5 to 60 bar, preferably 10 to 40 bar and the residence time will generally be 1 to 8 hours. The gas used will commonly be a non-reactive gas such as nitrogen together with monomer.

Hydrogen may be introduced into a reactor to control the molecular weight of the polymer as is well-known and routine in the art. In one embodiment, the mole ratio of hydrogen to total olefin monomer in the circulating gas stream is in a range of from 0.001 or 0.002 or 0.003 to 0.014 or 0.016 or 0.018 or 0.024, wherein a desirable range may comprise any combination of any upper mole ratio limit with any lower mole ratio limit described herein. Expressed another way, the amount of hydrogen in the reactor at any time may range from 1000 ppm to 20,000 ppm in one embodiment, and from 2000 to 10,000 in another embodiment, and from 3000 to 8,000 in yet another embodiment, and from 4000 to 7000 in yet another embodiment, wherein a desirable range may comprise any upper hydrogen limit with any lower hydrogen limit described herein.

### Preparation of polyolefin films

The polyolefin films of the present invention are extruded and cast or blown from a polyolefin composition prepared with the described surface-modified catalysts.

Optionally, one or more additional additives may be blended with the polyolefin composition. With respect to the physical process of producing the blend of polyolefin and one or more additives, sufficient mixing should take place to assure that a uniform blend will be produced prior to conversion into a finished film product. One method of blending the additives with the polyolefin is to contact the components in a tumbler or other physical blending means, the polyolefin being in the form of reactor granules. This can then be followed, if desired, by melt blending in an extruder. Another method of blending the components is to melt blend the polyolefin pellets with the additives directly in an extruder, Brabender or any other melt blending means, preferably an extruder.

Non-limiting examples of additives include processing aids such as fluoroelastomers, polyethylene glycols and polycaprolactones, antioxidants, nucleating agents, acid scavengers, plasticizers, stabilizers, anticorrosion agents, blowing agents, other ultraviolet light absorbers such as chain-breaking antioxidants, etc., quenchers, antistatic agents, slip agents, pigments, dyes and fillers and cure agents such as peroxide.

In particular, antioxidants and stabilizers such as organic phosphites, hindered amines, and phenolic antioxidants may be present in the polyolefin compositions of the invention from 0.001 to 2 wt % in one embodiment, and from 0.01 to 1 wt % in another embodiment, and from 0.05 to 0.8 wt % in yet another embodiment; described another way, from 1 to 5000 ppm by weight of the total polymer composition, and from 100 to 3000 ppm in a more particular embodiment. Non-limiting examples of organic phosphites that are suitable are tris(2,4-di-tert-butylphenyl)phosphite (IRGAFOS 168) and di(2,4-di-tert-butylphenyl)pentaerithritol diphosphite (ULTRANOX 626). Non-limiting examples of hindered amines include poly[2-N,N.'-di(2,2,6,6-tetramethyl-4-piperidinyl)-hexanediamine-4-(1-amino-1,1,3,3-tetramethylbutane)symtriazine] (CHIMASORB 944); bis(1,2,2,6,6-pentamethyl-4-piperidyl)sebacate (TINUVIN 770). Non-limiting examples of phenolic antioxidants include pentaerythrityl tetrakis(3,5-di-tert-butyl-4-hydroxyphenyl) propionate (IRGANOX 1010); 1,3,5-Tri(3,5-di-tert-butyl-4-hydroxybenzyl-isocyanurate (IRGANOX 3114); tris(nonylphenyl)phosphite (TNPP); and Octadecyl-3,5-Di-(tert)-butyl-4-hydroxyhydrocinnamate (IRGANOX 1076); other additives include those such as zinc stearate and zinc oleate.

Fillers may be present from 0.01 to 5 wt % in one embodiment, and from 0.1 to 2 wt % of the composition in another embodiment, and from 0.2 to 1 wt % in yet another embodiment and most preferably, between 0.02 and 0.8 wt %. Desirable fillers include but not limited to titanium dioxide, silicon carbide, silica (and other oxides of silica, precipitated or not), antimony oxide, lead carbonate, zinc white, lithopone, zircon, corundum, spinel, apatite, Barytes powder, barium sulfate, magnesiter, carbon black, acetylene black, dolomite, calcium carbonate, talc and hydrotalcite compounds of the ions Mg, Ca, or Zn with Al, Cr or Fe and CO₃ and/or HPO₄, hydrated or not; quartz powder, hydrochloric magnesium carbonate, glass fibers, clays, alumina, and other metal oxides and carbonates, metal hydroxides, chrome, phosphorous and brominated flame retardants, antimony trioxide, silica, silicone, and blends thereof. These fillers may particularly include any other fillers and porous fillers and supports known in the art.

In total, fillers, antioxidants and other such additives are preferably present to less than 2 wt % in the polyolefin compositions of the present invention, preferably less than 1 wt %, and most preferably to less than 0.8 wt % by weight of the total composition.

In one embodiment, an oxidizing agent is also added during the pelletizing step as a reactive component with the polyolefin composition. In this aspect of the polyolefin compositions of the invention, the compositions are extruded with an oxidizing agent, preferably oxygen, as disclosed in WO 03/047839.

The resultant pelletized polyolefin compositions, with or without additives, are processed by any suitable means for forming films: film blowing or casting and all methods of film formation to achieve, for example, uniaxial or biaxial orientation such as described in PLASTICS PROCESSING (Radian Corporation, Noyes Data Corp. 1986). In a particularly preferred embodiment, the polyethylene compositions of the present invention are formed into films such as described in the FILM EXTRUSION MANUAL, PROCESS, MATERIALS, PROPERTIES (TAPPI, 1992). Even more particularly, the films of the present invention are blown films, the process for which is described generally in FILM EXTRUSION MANUAL, PROCESS, MATERIALS, PROPERTIES pp. 16-29, for example.

Any extruder operating under any desirable conditions for the respective polyolefin composition can be used to produce the films of the present invention. Such extruders are known to those skilled in the art. A mono or multi-layer die can be used.

The temperature across the zones of the extruder, neck and adapter of the extruder ranges from 150 °C to 230 °C in one embodiment, and from 160 °C to 210 °C in another embodiment, and from 170 °C to 190 °C in yet another embodiment. The temperature across the die ranges from 160 °C to 250 °C in one embodiment, and from 170 °C to 230 °C in another embodiment, and from 180 °C to 210 °C in yet another embodiment.

Thus, the films of the present invention can be described alternately by any of the embodiments disclosed herein, or a combination of any of the embodiments described herein. Embodiments of the invention, while not meant to be limiting, may be better understood by reference to the following examples.

### Examples

### Example 1

The supported catalyst A is prepared as follows:

8.9 ml methylalumoxane in toluene (30 weight-%) is mixed with 12.1 ml dry toluene and added to 84.5 mg di(n-benzyl)di(n-butylcyclopentadienyl)hafnium and stirred at room temperature for 60 min. The obtained solution is added dropwise during 5 min. to 5 g silica (Grace Sylopol grade, APS 20 µm, BET P.V. 1.4 mL/g SiO₂, av. pore diameter 191 Å, total OH mmol/g 0.62) and stirred at room temperature for 60 min. The solvents are evaporated off under nitrogen flow at 50 °C for 210 min to obtain the supported catalyst A.

### Example 2

A surface-modified catalyst composition A1 is prepared as follows: 6.6 mg zinc stearate are dissolved in 1.5 ml dry toluene and added to 1 g of the supported catalyst A. The obtained slurry is shaken for 5 min. and then allowed to stand for 10 min. The slurry is then dried for 120 min under a flow of argon at 50 °C to obtain the surface-modified catalyst composition A1.

### Example 3

A surface-modified catalyst composition A2 is prepared as follows:

3.3 mg zinc stearate and 3.3 mg octadecylbis(2-hydroxyethyl)amine are dissolved in 1.5 ml dry toluene and added to 1 g of the supported catalyst A. The obtained slurry is shaken for 5 min. and then allowed to stand for 10 min. The slurry is then dried for 120 min under a flow of argon at 50 °C to obtain the surface-modified catalyst composition A2.

### Example 4

A surface-modified catalyst composition A3 is prepared as follows:

6.6 mg octadecylbis(2-hydroxyethyl)amine are dissolved in 1.5 ml dry toluene and added to 1 g of the supported catalyst A. The obtained slurry is shaken for 5 min. and then allowed to stand for 10 min. The slurry is then dried for 120 min under a flow of argon at 50 °C to obtain the surface-modified catalyst composition A3.

### Example 5

The supported catalyst A4 is prepared as follows:

8.9 ml methylalumoxane in toluene (30 weight-%) is mixed with 12.1 ml dry toluene and added to 84.5 mg di(n-benzyl)di(n-butylcyclopentadienyl)hafnium and stirred at room temperature for 60 min. The obtained solution is added dropwise during 5 min. to 5 g silica (Grace Sylopol grade, APS 20 µm, BET P.V. 1.4 mL/g SiO₂, av. pore diameter 191 Å, total OH mmol/g 0.62) and stirred at room temperature for 45 min and allowed to stand for 120 min. 25 mg zinc stearate and 25 mg octadecylbis(2-hydroxyethyl)amine are dissolved in 1 ml dry toluene and added to the catalyst slurry, followed by stirring at room temperature for 15 min. The solvents are evaporated off under nitrogen flow at 50 °C for 230 min to obtain the surface-modified supported catalyst A4.

### Example 6

The surface-modified supported catalyst A5 is prepared as follows:

8.9 ml methylalumoxane in toluene (30 weight-%) is mixed with 10.1 ml dry toluene and added to 84.5 mg di(n-benzyl)di(n-butylcyclopentadienyl)hafnium (100%-w concentrated) and stirred at room temperature for 60 min. The obtained solution is added dropwise during 5 min. to 5 g silica (Grace Sylopol grade, APS 20 µm, BET P.V. 1.4 mL/g SiO₂, av. pore diameter 191 Å, total OH mmol/g 0.62) and stirred at room temperature for 60 min. Then 50 mg of octadecylbis(2-hydroxyethyl)amine dissolved in 1.0 ml toluene was added to catalyst the slurry and the mixture stirred for 5 min. Then the solvent was evaporated off under nitrogen flow at 50 °C during 190 min to obtain dry catalyst. Then 20 mg of Al-distearate was added to 1 g the above obtained catalyst and shaked for 5 min to obtain the final supported catalyst A5.

### Example 7

A surface-modified catalyst composition A6 is prepared as follows:

20 mg Zn-stearate was added dry to 1 g of the supported catalyst A. The catalyst was then shaken for 5 minutes to obtain the surface-modified catalyst composition A6.

### Example 8

A surface-modified catalyst composition A7 is prepared as follows:

20 mg Al-distearate was added dry to 1 g of the supported catalyst A. The catalyst was then shaken for 5 minutes to obtain the surface-modified catalyst composition A7.

### Example 9

A surface-modified catalyst composition A8 is prepared as follows:

10 mg Zn-stearate was added dry to 1 g of the supported catalyst A. The catalyst was then shaken for 5 minutes to obtain the surface-modified catalyst composition A8.

The catalysts of Examples 1 to 9 were used for the preparation of polyethylene films.

### Polymerization

COPO=Copolymerisation of ethylene and 1-hexene. Polymerisations were carried out in a Büchi 2 L stainless steel autoclave reactor equipped with a paddle stirrer and a continuous supply of ethylene. Ethylene (>99.95%), nitrogen (>99.999%) and isobutane (>97%), 1-hexene (>99%) are further treated with sets of purifiers removing selectively O₂, H₂O, CO, CO₂ and acetylene. The comonomer (25 mL) was fed to the reactor simultaneously with ethylene. Polymerization temperature was 80 °C and polymerisation time 60 min and the ethylene pressure 5 bar unless otherwise indicated.

An appropriate amount of the catalyst solution is charged to a feeding vessel in glove box and the catalyst solution transferred to the stirred (400 min⁻¹) reactor. The Büchi 2.0 stirred autoclave reactor is purged with nitrogen and charged with 600 mL of isobutane at room temperature, followed by the addition of the catalyst from a catalyst feeding funnel with additional 600 mL isobutane. The reactor was then heated to +80°C, after which the polymerisation was started by adding the 25 mL of 1-hexene in one batch using continuous feed of ethylene. The ethylene feed was then used to adjust the reactor pressure to the targeted value. The ethylene partial pressure was 5 bars and the total pressure 17.6 bars.

### Physical parameters and gel content

MFR's of the polymers produced were measured according to the ISO 1133 method (190 °C, 21 kg load). The molecular weight averages and molecular weight distributions were determined using a Waters 150C SEC instrument. A set of two mixed bed and one 10"7 Å TSK-Gel columns from TosoHaas was used. The analyses were performed in 1,2,4-trichlorobenzene (TCB) stabilised with BHT at 135°C with flow rate 0.7 ml/min. The columns were calibrated with NMWD polystyrene standards and BMWD polyethylenes. The FTIR were measured using NICOLET Magna-IR 550 and the DSC melting points analysed with METTLER TOLEDO 822. The bulk density was measured according to ASTM D1895.

The gels were determined using pressed plate gel analysis method described in a non-published patent application EP05256920.0 In this method, typically 10 g of the polymer obtained from the COPO polymerisations is compression moulded into a sheet form between 50 and 250 microns in thicknesses. Pressures suitable to obtain such sheet thicknesses may be from 20 to 500 kN with temperature during moulding approximately 150 to 200°C before being allowed to cool. The pressed sheet may then be removed and observed for inhomogeneities visually using a light microscope and the number of inhomogeneities in a given area determined from a photograph of the pressed sheet. The obtained results are summarized in Table 1.

It should be noted that there are additional methods for measuring gel amounts depending e.g. on the films. E.g. for blown film gels being > 150 µm are calculated as gels/kg. In cast films the the amount of gels is measured for gels >200 µm per square meter. I this application the gels are measured from the polymer, which gives a good indication of the quality of the polymer in respect of gel formation.

**Table 1**

| Catalyst | A | A1 | A2 | A3 | A4 | A5 | A6 | A7 | A8 |
|---|---|---|---|---|---|---|---|---|---|
| Additive amount (w-% of silica) | 0 | 0.66 Zn | 0.33 Arm + 0.33 Zn | 0.66 Arm | 0.33 Ann + 0.33 Zn | 1.0 Ann + 0.4 Al | 2.0 Zn | 2.0 Al | 1.0 Zn |
| Hafnium amount (w-%) | 0.33 | 0.33 | 0.33 | 0.33 | 0.33 | 0.33 | 0.33 | 0.33 | 0.33 |
| Al/M ratio | 300 | 300 | 300 | 300 | 300 | 300 | 300 | 300 | 300 |
| Catalyst(mg) | 189,6 | 179,4 | 175,5 | 179,4 | 186 | 197,7 | 175,7 | 184,1 | 180,1 |
| Ethylene consumption (g) | 124 | 137 | 140 | 138 | 119 | 85 | 85 | 117 | 109 |
| Activity (kg(PE)/g(cat) | 1,18 | 1,36 | 1,45 | 1,36 | 1,15 | 0,83 | 0,92 | 1,15 | 1,13 |
| Yield(g) | 223 | 244 | 255 | 244 | 214 | 164 | 163 | 212 | 204 |
| MFR₂₁ | 0,7 | 0,82 | 0,25 | 0,75 | 0,75 | 0,61 | 0,96 | 0,6 | 0,81 |
| Bulk density (kg/m³) | 430 | 380 | 390 | 430 | 390 | 397 | 490 | 440 | 470 |
| GPC: Mw (g/mol) | 313000 | 331000 | 371000 | 339000 | 300000 | 349000 | 294000 | 324000 | 304000 |
| GPC: Mn (g/mol) | 139700 | 139400 | 159000 | 142600 | 137800 | 156200 | 129200 | 137900 | 131600 |
| GPC: Polydispersity | 2,2 | 2,4 | 2,3 | 2,4 | 2,2 | 2,2 | 2,3 | 2,3 | 2,3 |
| FT-IR:Comonomer content (wt-%) | 5,2 | 4,6 | 4,7 | 4,8 | 5,1 | 6,3 | 5,4 | 5,2 | 5,1 |
| Trans-vinylene | 0,06 | 0,06 | 0,06 | 0,05 | 0,05 | 0,03 | 0,06 | 0,05 | 0,06 |
| Vinyl | 0,06 | 0,04 | 0,05 | 0,05 | 0,05 | 0,07 | 0,06 | 0,06 | 0,05 |
| Vinylidene | 0,05 | 0,04 | 0,04 | 0,04 | 0,04 | 0,06 | 0,05 | 0,04 | 0,04 |
| Gel analysis (gels/10g) | 160 | 4 | 19 | 24 | 7 | 0 | 23 | *6* | *50* |

| | | | | | | | | | |
|---|---|---|---|---|---|---|---|---|---|
| Temperature 80oC, comonomer 25 mL, run time 60 min, rpm 400,*p*(C₂)=5 bar, medium isobutene 1200 mL, carrier SiO₂ Grace Davison 20 µm. Zn: Zinc starate Arm: Octadecylbis(2-hydroxyethyl)amine | | | | | | | | | |

As is evident for Examples 2 to 9 in comparison to Reference Example 1 the gel content is substantially lowered by the surface-modification of the catalyst.

## Claims

1. Use of a catalyst composition treated with a surface modifier in the polymerization of olefins for lowering the gel content in the resulting polyolefin, wherein the surface modifier has a polar residue capable of interacting with the surface of the catalyst composition and a lipophilic residue and is selected from carboxylate metal salts, nitrogen containing catalyst surface modifiers, phosphorus containing catalyst surface modifiers, oxygen containing catalyst surface modifiers, sulfur containing catalyst surface modifiers, fluoro containing polymeric catalyst surface modifiers or mixtures thereof and wherein the gel content is determined by using pressed plate gel analysis method.

2. Use according to claim 1 wherein the olefins are selected from ethylene, 1-propene, 1-butene, 1-pentene, 4-methyl-pent-1-ene, 1-hexene, cyclohexene, 1-octene, norbomene, buta-diene, hexadiene, octadiene or mixtures thereof.

3. Use according to claims 1 or 2, wherein the surface modified catalyst composition comprises a supported single site catalyst.

4. Use according to any one of claims 1 to 3, wherein the modified catalyst composition further comprises an activator and/or a cocatalyst.

5. Use according to any one of claims 1 to 4, wherein the ratio of the weight of the catalyst surface modifier to the weight of the transition metal of the catalyst is in the range of from 1 to 100.

6. Use according to any one of claims 1 to 5, wherein the surface modifier and the catalyst composition are contacted prior to their introduction into the polymerization reactor.

7. Use according to any one of claims 1 to 6, wherein the surface modifier and the catalyst are introduced separately into the polymerization reactor.

8. Use according to any one of claims 1 to 7, wherein the surface modified catalyst is obtainable by the steps of
a) forming a supported catalyst in solution
b) drying the supported catalyst
c) reslurrying the catalyst obtained in step b)
d) adding the catalyst surface modifier to the reslurried catalyst obtained in step c)

9. Use according to any of the claims 1 to 8, wherein the catalyst surface modifier is a mixture of at least two compounds selected from carboxylate metal salts, nitrogen containing catalyst surface modifiers, phosphorus containing catalyst surface modifiers, oxygen containing catalyst surface modifiers and sulfur containing catalyst surface modifiers.

10. Use according to any of the claims 1 to 9, wherein the catalyst surface modifier is a mixture of two compounds wherein one compound is selected from carboxylate metal salts and the other compound is selected from nitrogen containing catalyst surface modifiers.

11. Polyethylene composition **characterized by** Mw 60000 to about 350000 g/mol Mn 10000 to about 150000 g/mol, MFR2 (2.16kg/190°C) 0.1 to 200 g/10 min, and density from about 910 to 960 kg/m3 and having gel content of less than 100 gels/10 g as determined with pressed plate method.

12. Film prepared from a polyethylene composition according to claim 11.
